# EUROPÄISCHE PATENTSCHRIFT

(11) **EP 2 370 297 B1**
(45) Veröffentlichungstag und Bekanntmachung des Hinweises auf die Patenterteilung: **09.04.2014**
(21) Anmeldenummer: 09806074.2
(22) Anmeldetag: 17.12.2009
(51) Int. Cl.: B60S 1/08

(54) **OPTISCHES MODUL MIT MULTIFOKALER OPTIK ZUR ERFASSUNG VON FERN- UND NAHBEREICH IN EINEM BILD**
OPTICAL MODULE HAVING MULTIFOCAL LENS FOR DETECTING FAR AND NEAR FIELDS IN AN IMAGE
MODULE OPTIQUE COMPORTANT UNE OPTIQUE MULTIFOCALE POUR DETECTER UNE ZONE LOINTAINE ET UNE ZONE PROCHE SUR UNE IMAGE

(30) Priorität: 23.12.2008 DE 102008062977
(43) Veröffentlichungstag der Anmeldung: 05.10.2011
(73) Patentinhaber: ADC Automotive Distance Control Systems GmbH, 88131 Lindau (DE)
(72) Erfinder: ROTHENHÄUSLER, Konrad, 88147 Achberg (DE)
(74) Vertreter: Büchner, Jörg
(86) Internationale Anmeldenummer: PCT/DE2009/001759
(87) Internationale Veröffentlichungsnummer: WO 2010/072198

(56) Entgegenhaltungen:
- EP-A1- 1 923 280
- WO-A1-2005/075248
- DE-A1-102004 037 871
- DE-A1-102005 004 513
- JP-A- 2006 184 844

## Beschreibung

Die Erfindung betrifft ein optisches Modul zur Erfassung eines Fern- und eines Nahbereichs in einem Bild. Ein betreffendes optisches Modul kommt insbesondere in einem Kraftfahrzeug zur Außenraumbeobachtung durch die Windschutzscheibe zum Einsatz.

Intelligente Fahrerassistenzsysteme wie z.B. die Erkennung verschiedenster Objekte im Verkehrsgeschehen zeigen den flexiblen Einsatz von Kamerasystemen.
Moderne Kraftfahrzeugsensoren, die an der Windschutzscheibe angeordnet sind und durch diese hindurchblicken sind z.B. die Fahrzeugkamera, die Nachtsichtkamera oder auch diverse optische Abstandssensoren. Diese optischen Sensoren benötigen wie der Fahrer des Kraftfahrzeugs klare Sicht, um fehlerhafte Messsignale zu vermeiden.

Wassertropfen, Schnee und Schmutz auf der Windschutzscheibe werden in der Regel von einem elektrischen Scheibenwischer mit einer Gummilippe abgezogen. Der Scheibenwischer wird bei den meisten aktuell im Verkehr befindlichen Kraftfahrzeugen manuell ein und ausgeschaltet. Diese Aufgabe des Kraftfahrzeugfahrers wird zunehmend von einem optoelektronischen Regensensor übernommen.

Das Funktionsprinzip eines optoelektronischen Regensensors basiert auf der Lichteinkopplung in die Windschutzscheibe unter einem Winkel, der die Bedingung der Totalreflexion zwischen Glas und Luft erfüllt aber kleiner ist als der erforderliche Winkel für eine Totalreflexion zwischen Glas und Wasser. Bei einer trockenen Scheibe wird ein großer Teil des in die Scheibe eingekoppelten Lichtbündels an der Scheibenaußenfläche totalreflektiert und an der Scheibeninnenfläche am Empfänger ausgekoppelt.
Befinden sich Wassertropfen auf der Scheibe wird die Winkelbedingung für Totalreflexion nicht mehr eingehalten. Dadurch wird ein Teil des Lichtbündels durch die Wassertropfen ausgekoppelt und kann den Empfänger im Fahrzeuginnenraum nicht mehr erreichen.

Dieses Prinzip zur Regenerkennung ist sehr störanfällig und abhängig von der Tropfengröße. Bei Nieselregen versagt dieses Messprinzip oft, da das ausgekoppelte Lichtsignal und damit die Differenz des Empfängersignals für eine sichere Regenerkennung zu gering ist.

Der optoelektronische Regensensor hat damit auch Probleme bei der Erkennung von Schneeflocken, welche beim Auftreffen auf die Scheibe in feine Tröpfchen zerfallen, bei trockenem Schmutz und auch bei Insekten, die auf die Windschutzscheibe auftreffen.

Der kapazitive Regensensor stellt ein weiteres serienreifes Prinzip zur Regenerkennung dar. Das Sensorprinzip basiert auf der stark abweichenden Dielelektrizitätskonstante von Wasser im Vergleich zu Glas oder Luft. Eine geschickte Anbringung von zwei Kondensatorplatten an der Fahrzeugscheibeninnenfläche bildet mit dem dazwischen liegenden Medium einen Kondensator. Ziel ist es hier, den Verlauf der elektrischen Feldlinien nach außen durch den Luftraum knapp über der Windschutzscheibe zu ermöglichen. Befindet sich Wasser in diesem Luftraum oder feuchter Schmutz, so bewirkt die wesentlich höhere Dielelektrizitätskonstante des hinzugekommenen Mediums eine ansteigende Gesamtkapazität des dadurch gebildeten Kondensators. Auch dieser Sensor hat eine eingeschränkte Funktionalität. Die Unterscheidung zwischen feinen Tropfen und Störeinflüssen ist auch bei diesem Sensor ein Problem weshalb die Empfindlichkeit des Sensors reduziert werden muss. Eine Scheibenbenetzung mit feinen Tropfen bewirkt dadurch ein relativ verzögertes Wischsignal.

Ein Nachteil beider Sensoren ist der verhältnismäßig große Flächenbedarf an der Windschutzscheibe. Durch eine Verkleinerung der Sensorfläche würde die Reaktionsgeschwindigkeit des Sensors bei einsetzendem Regen noch weiter herabgesetzt, da die Wahrscheinlichkeit sinkt, dass einer der ersten Tropfen in einem kleineren Sensorfeld auftrifft.
Der Fahrer erwartet von der Komfortelektronik, die er meist gegen Aufpreis erhält, ein schnelles und zuverlässiges Funktionieren. Im Idealfall sollte das automatische System in seiner Reaktionsgeschwindigkeit und dem Wischverhalten dem Verhalten des Kraftfahrzeugfahrers entsprechen, um nicht unangenehm oder störend zu wirken. Beispielsweise sollte die Windschutzscheibe bereits bei Nieselregen gewischt werden. Wenn die Windschutzscheibe zunehmend durch Insekten verschmutzt wird, ist ein Waschprogramm erforderlich. Wenn die Scheibe Schlieren hat, sollte sie erneut gewischt werden.
In vielen dieser Situationen versagen die bisher entwickelten serienreifen Sensoren aufgrund fehlender Unterscheidungsmöglichkeiten bedingt durch ihre einfach gehaltene Sensorstruktur.

Die Notwendigkeit zur Vermeidung einer weiteren Anhäufung der Sensorelemente verschiedener Fahrerassistenz- und Komfortsysteme in den beengten Raumverhältnissen im oberen Windschutzscheibenbereich, zwingt in der Zukunft zur Integration von mehreren Sensoren zu einem einzigen Multifunktionssensor.

So gelangt man zu dem Ansatz, eine Regensensorfunktion in eine existierende Fahrzeugkamera, die den Außenraum beobachtet als videobasierten Regensensor zu integrieren. Es ist bekannt, durch Kombinationen mit zusätzlichen optischen Komponenten Fernbereich und Nahbereich (Windschutzscheibe) auf einen Bildsensor abzubilden. Ein Ansatz hierzu ist eine Vorsatzlinse in einem Teilsichtfeld vor dem Objektiv der Fahrzeugkamera. Auf diese Weise bildet der Teil des Strahlengangs, der durch die Vorsatzlinse verläuft, den Nahbereich scharf auf dem Bildsensor ab und der Rest den Fernbereich (Straßenszene).

Das Patent DE 102004037871 B4 zeigt ein entsprechendes optisches Modul für ein den Außenvorraum in Fahrtrichtung eines Kraftfahrzeugs erfassendes Assistenzsystem. Es wird vorgeschlagen, einen Bildsensor abwechselnd für eine Außenraumassistenzfunktion und eine Regenfunktionalität zu verwenden.

Der Übergangsbereich zwischen Nah- und Fernbereich zeigt bei diesem Ansatz, durch die sehr ungünstige Positionierung der Linse kurz vor der Eintrittspupille, eine starke Verwischung. Diese Bildverwischung erstreckt sich nahezu über das ganze Bild. Die exakte Ausrichtung der optischen Mittel (Spiegel, Strahlteiler, Nahoptik oder Vorsatzlinse) für die Nahbereichsabbildung gestaltet sich schwierig. Für die gezeigten Lösungen sind zudem stets teuere zusätzliche optische Mittel nötig.

Aufgabe der Erfindung ist es, eine kostengünstige, stabile und zuverlässige Optik für einen Kamerasensor anzugeben.

Gegenstand der Erfindung ist ein optisches Modul mit einem Halbleiterelement mit einer für elektromagnetische Strahlung sensitiven Fläche und einer Linse oder einer Linsenkombination (Objektiv) zum Projizieren elektromagnetischer Strahlung auf die sensitive Fläche des Halbleiterelements. In einem definierten Teilvolumen im Raum zwischen dem Objektiv und der sensitiven Fläche des Halbleiterelements ist ein zusätzliches optisches Element angeordnet.
Durch dieses zusätzliche, partielle optische Element wird ein erster Entfernungsbereich auf einen ersten Bereich der sensitiven Fläche des Halbleiterelements abgebildet, ein Fernbereich. Im zweiten Bereich des Sichtfeldes bzw. der sensitiven Fläche des Halbleiterelements, in dem sich das zusätzliche optische Element nicht befindet, wird ein zweiter Entfernungsbereich abgebildet, ein Nahbereich.

Dadurch werden auf der sensitiven Fläche des Halbleiterelements in einem ersten Bereich die elektromagnetischen Strahlen detektiert, die das zusätzliche optische Element über die gesamte Breite durchlaufen. Im zweiten Bereich werden die elektromagnetischen Strahlen detektiert, die außerhalb bzw. nicht durch die gesamte Breite des zusätzlichen optischen Elements verlaufen. Das zusätzliche optische Element füllt also einen Teil des Raumes vor der sensitiven Fläche des Halbleiterelements, durch den die elektromagnetischen Strahlen auf die sensitive Fläche gelangen. Das zusätzliche optische Element befindet sich nicht in der gesamten Objektweite, sondern in einem Teilfeld der Bildweite des Objektivs.

Eine anschließende Bildverarbeitung kann das Gesamtbild, das sich aus den zwei Teilbildern der beiden unterschiedlichen Entfernungsbereiche zusammensetzt in einem Zyklus oder getrennt auswerten.

Gemäß einer bevorzugten Ausführung der Erfindung ist der Brechungsindex des zusätzlichen optischen Elements größer als der Brechungsindex des Mediums, das das zusätzliche optische Element umgibt. Das Medium, das das zusätzliche optische Element umgibt ist typischerweise Luft. Die Abbildung des zweiten Entfernungsbereichs wird nur unwesentlich von dem zusätzlichen optischen Element beeinflusst und ist somit von dem das zusätzliche optische Element umgebenden Medium mit kleinerem Brechungsindex abhängig.

Erfindungsgemäß ist das Objektiv derart positioniert bzw. eingestellt und die Dicke bzw. der Brechungsindex des zusätzlichen optischen Elements derart vorgegeben, dass im ersten Bereich der sensitiven Fläche des Halbleiterelements ein optischer Fernbereich und im zweiten Bereich ein optischer Nahbereich abgebildet ist. Der Nahbereich liegt im Bereich von Zentimetern, der Fernbereich entspricht dem Bereich ab etwa zwei Metern.

Bei erfindungsgemäßer Positionierung des Objektivs führt die scharfe Abbildung des Nahbereichs zu einer sehr unscharfen, defokussierten Abbildung des Fernbereichs, solange kein zusätzliches optisches Element im optischen Modul angeordnet ist.
Durch das zusätzliche, partielle optische Element wird der Fernbereich abgebildet. In dem Bereich des Sichtfeldes, in dem sich dieses partielle optische Element nicht befindet, wird das Nahfeld abgebildet.

Die bi- oder multifokale Optik des optischen Moduls basiert auf dem Prinzip des axialen Versatzes einer brechenden Planfläche. Die Kamera wird dazu nicht auf den Fernbereich fokussiert, wie es im Stand der Technik beschrieben ist, sondern wird auf eine Objektweite von wenigen Zentimetern fokussiert. Diese Objektweite beschreibt z.B. eine Ebene die im Schnittpunkt des unteren Sichtfeldes der Kamera mit der Windschutzscheibenebene liegt. Auf dem Bildsenosr entsteht so eine scharf fokussierte Abbildung dieser Nahfeldebene. Um die anderen Fahrerassistenzfunktionen zu ermöglichen, muss auf dem Großteil des Bildsensors der Fernbereich scharf abgebildet werden. Dies wird dadurch erreicht, dass das partielle optische Element in den Bereich des Strahlengangs vor dem Bildsensor eingesetzt wird, der für die Fernfeldabbildung verwendet werden soll. Die Dicke des partiellen optischen Elements ergibt sich abhängig vom Brechungsindex des Materials durch den erforderlichen axialen Versatz zwischen der Bildweite der Fernbereichsabbildung und der Bildweite der Nahbereichsabbildung.

Gemäß einer bevorzugten Ausgestaltung der Erfindung ist das zusätzliche optische Element eine planparallele transparente Platte. Diese planparallele transparente Platte kann insbesondere aus Glas hergestellt sein, beispielsweise aus hochwertigem Bor-Kronglas, Borosilikatglas oder dergleichen. Entsprechend einer weiteren bevorzugten Ausführungsform kann die planparallele Platte aus transparentem Kunststoff hergestellt sein, beispielsweise aus Polycarbonat oder Polymethylmethacrylat (PMMA).

In einer besonderen Ausgestaltung der Erfindung ist das gesamte zusätzliche optische Element oder nur ein Teilvolumen des Elements ein Teil einer Zerstreuungslinse, eine Mikrolinsenanordnung (Mikrolinsenarray) mit Zerstreuungslinsen, ein optischer Tiefpassfilter oder ein diffraktives Mikrolinsenarray. Bevorzugt befinden sich diese auf der der sensitiven Fläche des Halbleiterelements zugewandten Seite des zusätzlichen optischen Elements. Ein Mikrolinsenarray gebildet aus Zerstreuungslinsen, die den konvergierenden Strahlengang in definierter Weise aufweiten bzw. divergieren, ermöglicht die Abbildung des Fernbereichs an dem Punkt der optischen Achse, an dem eine optimale Abbildung des Nahfeldes besteht.

Gemäß einer alternativen Ausführungsform besteht das zusätzliche optische Element aus mindestens zwei planparallelen Bereichen mit unterschiedlicher Dicke. Das partielle optische Element ist hierbei abgestuft. Alternativ kann die "Abstufung" durch eine Materialvariation innerhalb einer planparallelen transparenten Platte realisiert werden. Hierzu werden in mindestens zwei Bereichen Materialien mit unterschiedlichen Brechungsindizes verwendet.
In beiden Varianten werden mindestens zwei verschiedene auch überschneidende Schärfentiefenbereiche in einem Kamerabild ermöglicht.

Für eine kontinuierliche Dickenvariation kann das zusätzliche optische Element gemäß einer weiteren bevorzugten Ausführungsform keilförmig sein.

Die Kante des partiellen optischen Elements kann bevorzugt einen Übergang aufweisen, der an den Abbildungsstrahlengang angepasst ist. Dies kann z.B. eine abgestufte oder keilförmige Übergangsform sein. Eine Schwärzung des Übergangs kann zur Vermeidung von Streulichtstörfaktoren dienen.

In einer Fortführung der Erfindung kann das zusätzliche optische Element zyklisch in den Raum zwischen Objektiv und Bildsensor eingebracht werden, beispielsweise in Form eines "Chopperrades", also einer rotierenden Scheibe, die abwechselnd Segmente mit einer planparallelen Platte und Segment ohne Platte aufweist.

Eine ähnliche Vorrichtung kann in einer weiteren Ausführungsform verwendet werden, um zusätzliche optische Elemente unterschiedlicher Dicke und/oder unterschiedlicher Brechungsindizes zyklisch in den Raum zwischen Objektiv und Bildsensor einzubringen. Dadurch können zyklisch Bilder aufgenommen werden, die einen unterschiedlichen Schärfentiefebereich im Fernbereich abbilden. Aus den Bildern mit unterschiedlichem Schärfentiefebereich kann anschließend auf die Entfernung von Gegenständen im Fernbereich geschlossen werden.

Gemäß einer weiteren Ausführungsform kann das zusätzliche optische Element durch Füllung eines Teilvolumens mit einem flüssigen Medium, z.B. Wasser oder Öl, mit einem größeren Brechungsindex als dem des umgebenden Mediums (typischerweise Luft) realisiert sein.

Bevorzugt ist das partielle optische Element so dimensioniert, dass der erste Bereich der sensitiven Fläche des Halbleiterelements größer ist als der zweite Bereich. Das Verhältnis zwischen Fernbild und Nahbild wird durch die effektiv belegte Sichtfeldfläche durch das partielle optische Element bestimmt. Vorgeschlagen wird hier eine Aufteilung, die ein Bild gewährleistet, das zu 80% den Fernbereich abbildet und zu 20% den Nahbereich, je nach Komponenten und Applikation ist ein Verhältnis von 90% zu 10% vorteilhaft.

Vorteilhaft kann auf mindestens einer Seite des zusätzlichen optischen Elements eine Beschichtung angebracht sein, durch die Reflexionen vermieden werden.

Zusätzlich oder alternativ kann eine Beschichtung auf mindestens einer Seite des zusätzlichen optischen Elements angebracht werden, die elektromagnetische Strahlung in einem definierten Wellenlängenbereich filtert. Denkbar sind insbesondere Filterbeschichtungen für den IR- und UV-Bereich. Der Bereich der sensitiven Fläche, auf dem der Nahbereich abgebildet wird, dessen Strahlengang das zusätzliche optische Element nicht passiert, empfängt dadurch elektromagnetische Wellen ungefiltert, also auch außerhalb des sichtbaren Bereichs. Beispielsweise kann eine Beschichtung auf der Eintrittsseite des zusätzlichen optischen Elements, die UV-Licht filtert, das Element vor hohen UV-Intensitäten schützen. insbesondere bei einem zusätzlichen optischen Element aus Kunststoff ist dies erforderlich.
Zur Ausfilterung einer hohen UV-Intensität kann ein UV-Filter entweder mit der Windschutzscheibe kombiniert oder im vorderen Bereich des Objektivs dienen. Dadurch wird der Bildsensor vor hohen Intensitäten an UV-Strahlung geschützt. Dies hat den Vorteil, dass es zu einem geringeren Einfluss des lateralen Farbfehlers kommt, da die Wellenlängenbereiche, in denen das Objektiv optimiert ist, begrenzt sind. Ein anderer Vorteil ist eine Schutzfunktion für optische Bauteile hinter dem Filter, die vor allem beim Einsatz von Kunststofflinsen und zum Schutz des Bildsensors bei starker Sonneneinstrahlung erforderlich ist.

Die Erfindung sieht bevorzugt vor, dass das optische Modul im Innenraum eines Kraftfahrzeuges hinter der Windschutzscheibe angeordnet ist und dabei in Fahrtrichtung den Außenraum erfasst.

Gemäß einer bevorzugten Ausführungsform ist das optische Modul derart gestaltet, dass als zweiter Entfernungsbereich die Außenseite der Windschutzscheibe scharf auf dem zweiten Bereich (Nahbereich) der sensitiven Fläche des Halbleiterelements abgebildet wird. Durch das zusätzliche optische Element wird auf dem ersten Bereich (Fernbereich) der sensitiven Fläche des Halbleiterelements als erster Entfernungsbereich die vor dem Fahrzeug liegende Umgebung abgebildet. Das Halbleiterelement erfasst also gleichzeitig das Verkehrsgeschehen im Fernbereich, beispielsweise größer zwei Meter und die Windschutzscheibe im Nahbereich, beispielsweise kleiner 20 Zentimeter.

In einem Fahrzeug kann in einer bevorzugten Weiterbildung ein kamerabasierter Regensensor vorgesehen sein. Die Bilder vom ersten Bereich der sensitiven Fläche des Halbleiterelements (Außenseite der Windschutzscheibe) werden ausgewertet, wobei Regen oder Schmutzpartikel auf der Windschutzscheibe erkannt werden. Ein Ausgabesignal zur Aktivierung kann an eine Scheibenwischersteuerung und/oder Scheibenreinigung ausgegeben werden.

In einer bevorzugten Ausgestaltung ist eine Beleuchtungsquelle vorgesehen, die den Bereich des Sichtfeldes durch die Windschutzscheibe beleuchtet, der im zweiten Bereich der sensitiven Fläche des Halbleiterelements abgebildet wird. Vorteilhaft ist es, das Nahfeld mit IR-Licht auszuleuchten. Die Beleuchtungsquelle kann vorteilhaft durch einen optischen Verschluss gesteuert werden, insbesondere mit variabler Beleuchtungszeit der gesamten sensitiven Fläche des Halbleiterelements oder insbesondere für den Teilbereich der aktiven Fläche auf dem die Abbildung des Nahfeldes erfolgt.

Die Strahlung der Beleuchtungsquelle kann insbesondere über einen flexiblen Lichtleitkörper in die Windschutzscheibe eingekoppelt werden. Ein geeigneter flexibler Lichtleitkörper ist beispielsweise transparentes Silikon. Die Teilstrahlungsenergie kann über ein an der Scheibe angebrachtes Absorberelement in Wärme umgewandelt werden, die zum Heizen der Windschutzscheibenteilfläche dient. Als Absorberelemente können z.B. die aufgebrachten Heizdrähte einer bestehenden Scheibenheizung eingesetzt werden. Die als Absorberfläche verwendeten Heizdrähte können gleichzeitig als Abschattung des in Fahrtrichtung des Kraftfahrzeugs abgestrahlten Lichts dienen.

In einer bevorzugten Ausführungsform ist ein optisches Modul mit einem zumindest einseitig beschichteten zusätzlichen optischen Element vorgesehen, dessen Wellenlängenfilter den Wellenlängenbereich unterdrückt, der von der Beleuchtung.squelle zur Ausleuchtung des Nahbereichs verwendet wird. Der Bereich des Sichtfeldes durch die Windschutzscheibe wird insbesondere mit Licht im infraroten Wellenlängenbereich (IR) ausgeleuchtet und das zusätzliche optische Element ist mit einem Filter beschichtet, der die Transmission im infraroten Wellenlängenbereich unterdrückt. Dieser Wellenlängenbereich wird vom Kraftfahrzeuglenker und anderen Verkehrsteilnehmern nicht wahrgenommen. Gleichzeitig hat die sensitive Fläche des Halbleiterelements eine sehr hohe Empfindlichkeit für den IR-Bereich, was eine Ausleuchtung des Nahfeldes mit einer relativ geringen IR-Lichtintensität ermöglicht. Die Anbringung der Beleuchtungsquelle ist in mehreren Bereichen möglich. Die Beleuchtung kann im Dauerbetrieb oder zyklisch erfolgen. Eine zyklische Beleuchtung mit einem sinusförmigen Intensitätsverlauf oder eine getaktete Beleuchtung ist zu bevorzugen um Störeinflüsse im Bild des Fernbereichs zu vermeiden bzw. zu mildern.

Zusätzlich kann in einer vorteilhaften Ausgestaltung ein kapazitiver Regensensor im Fahrzeug vorgesehen sein. Die Signale von kapazitivem und kamerabasiertem Regensensor werden durch eine gemeinsame Auswerteeinheit ausgewertet. Beide Sensortypen ergänzen sich sehr gut und bieten in der Kombination hervorragende Erkennungseigenschaften. Der kapazitive Sensor kann vorteilhaft als Leiterbahn in transparenter Folie oder in einem Silikonkissen ausgeführt sein und die Elektronik in das Beleuchtungsmodul für den kamerabasierten Regensensor integriert werden.
Der kamerabasierte Regensensor hat beispielsweise Vorteile bei feinstem Nieselregen, während der kapazitive Regensensor hierbei kaum eine Signaländerung durch sich ändernde Kapazität erfährt. Der kapazitive Regensensor hat dagegen z.B. Vorteile bei einem vollflächigen Wasserfilm auf der Windschutzscheibe und kann diesen aufgrund der starken Kapazitätsänderung sicher detektieren, während der kamerabasierte Regensensor nur wenige Kanten im Bild finden wird, aus denen er auf Regentropfen schließt.

In einer vorteilhaften Ausgestaltung der Erfindung kann eine Keilplatte zwischen Windschutzscheibe und Objektiv im Sichtfeld der Nahbereichsabbildung angeordnet sein. Die Keilplatte ist also im objektseitigen Strahlengang der Nahbereichsabbildung angeordnet. Die Keilplatte lenkt elektromagnetische Strahlung von einem Bereich der Windschutzscheibe, welcher vom Sichtfeld der Fernbereichsabbildung durchdrungen wird, in das Sichtfeld der Nahbereichsabbildung ab. Die Keilplatte kann durch zwei Planflächen oder eine Planfläche und eine nichtplanare Fläche oder durch zwei nichtplanare Flächen definiert sein. Eine nichtplanare Fläche bedeutet eine sphärische, asphärische oder mikrostrukturierte Fläche. Die Keilplatte kann insbesondere aus einem transparenten Kunststoff bestehen. Die Keilplatte ist bevorzugt derart angeordnet, dass das dicke Ende oben und das dünne Ende unten ist. Dadurch wird der Strahlengang der Nahbereichsabbildung nach oben abgelenkt. Die Keilplatte kann vorteilhaft unterhalb oder im unteren Bereich des Strahlengangs der Fernbereichsabbildung angeordnet sein.

Bevorzugt ist die Keilplatte mit einer Filterbeschichtung beschichtet, wobei die Filterbeschichtung.bestimmte Wellenlängenbereiche unterdrückt, z.B. den sichtbaren Wellenlängenbereich. Die Oberseite der Keilplatte kann vorteilhaft zur Streulichtunterdrückung geschwärzt ist.
Der Vorteil bei Einsatz einer Keilplatte liegt in einem kleineren benötigten Schwarzdruckausschnitt der Windschutzscheibe sowie in kleineren Abmessungen des optischen Moduls bzw. Kamerasystems.

In einer bevorzugten Ausführungsform umfasst ein Fahrzeug eine Beleuchtungsquelle, deren elektromagnetische Strahlung über ein Einkoppelelement (z.B. einen flexiblen Lichtleitkörper) in die Windschutzscheibe eingekoppelt wird. Ein Auskoppelelement ist vorgesehen, welches durch Kleben oder Anpressen in festem Kontakt mit der Windschutzscheibe steht. In Abwesenheit von Wassertropfen auf der Windschutzscheibe wird die eingekoppelte elektromagnetische Strahlung innerhalb der Windschutzscheibe totalreflektiert. Durch das Auskoppelelement wird die Strahlung in Richtung des optischen Moduls ausgekoppelt und im Bereich der Nahbereichsabbildung (Teilbereich zur Regenerkennung) auf den Bildsensor abgebildet. Befinden sich Wassertropfen auf der Windschutzscheibe, wird ein Teil der eingekoppelten elektromagnetischen Strahlung durch die Wassertropfen ausgekoppelt und nicht mehr zum Auskoppelelement totalreflektiert. Somit kann das Vorliegen von Wassertropfen und die Regenmenge auf der Windschutzscheibe als Signaldifferenz von ausgekoppelter Intensität bei trockener im Vergleich zu nasser Windschutzscheibe ermittelt werden.

Das Auskoppelelement kann bevorzugt mit einer speziellen Filterbeschichtung beschichtet sein, die bestimmte Wellenlängenbereiche unterdrückt, z.B. den sichtbaren Wellenlängenbereich.

Das Auskoppelelement kann vorteilhaft auf der dem Objektiv zugewandten Seite durch geeignete Oberflächenbehandlung als Mattscheibe ausgebildet sein, wobei die Mattscheibenfläche in der Objektebene der Nahbereichsabbildung positioniert ist.

Das Auskoppelelement bedeckt in einer erweiterten Ausführungsform vorteilhaft nur eine definierte Teilfläche des Teilbereichs des Windschutzscheibensichtfeldes, der von der Nahbereichsabbildung erfasst wird. Dadurch kann sowohl die Differenzmessung des durch die Regentropfen ausgekoppelten Signals durchgeführt werden, als auch in dem anderen Teilbereich der durch die Tropfen zum Objektiv gestreute Signalanteil gemessen werden.
Beide Messverfahren ermöglichen in Kombination eine exakte Messung der Scheibenbenetzung.

Die Erfindung umfasst zudem ein Verfahren zur Bestimmung des Abstands bzw. von Positionsabweichungen zwischen einer Windschutzscheibe und einem oder mehreren optischen Modulen. Das optische Modul bildet dazu eine oder mehrere auf der Windschutzscheibe angeordnete Zielmarkierungen auf den zweiten Bereich der sensitiven Fläche des Halbleiterelements fokussiert ab. Von einer Auswerteeinheit kann eine Veränderung der Position der Windschutzscheibe relativ zur optischen Achse des optischen Moduls im Vergleich zu einer gespeicherten Ausgangsposition festgestellt und gemessen werden. Abweichungen der optischen Achse relativ zur Windschutzscheibe können durch eine Bildverarbeitung herausgerechnet werden. Dieses Verfahren ist besonders vorteilhaft, um die Geometrie eines Stereokamerasystems zu überwachen. Abweichungen der Zielmarken von den gespeicherten Ausgangspositionen ermöglichen eine Bestimmung der Änderung der Position der beiden Stereokameramodule zueinander.

Die Erfindung zeichnet sich als eine besonders kostengünstige Lösung aus. Gerade der Einsatz eines einfachen planparallelen Glas- oder Kunststoffplättchens bietet eine preisgünstige und sehr leistungsfähige Lösungsvariante für eine multifokale Optik in einem Optischen Modul.
Besonders der geringe Verwischungsbereich und die einfache Ausrichtung des optischen Elements sind bei diesem optischen Aufbau von Vorteil. Im Vergleich zu einem Einbau eines optischen Zusatzelements in der Objektweite der Kamera bietet der hier vorgeschlagene Einbau in der Bildweite den großen Vorteil, dass es zu keiner direkten Einkopplung von Störlichtfaktoren kommt.
Nachfolgend wird die Erfindung anhand von Ausführungsbeispielen und Figuren erläutert.
Fig. 1: Abbildungseigenschaften eines optischen Moduls in einem Kraftfahrzeug mit Objektiv und Halbleitersensor
Fig. 2: Abbildungseigenschaften eines optischen Moduls in einem Kraftfahrzeug mit zusätzlichem, partiellem optischen Element zwischen Objektiv und Halbleitersensor

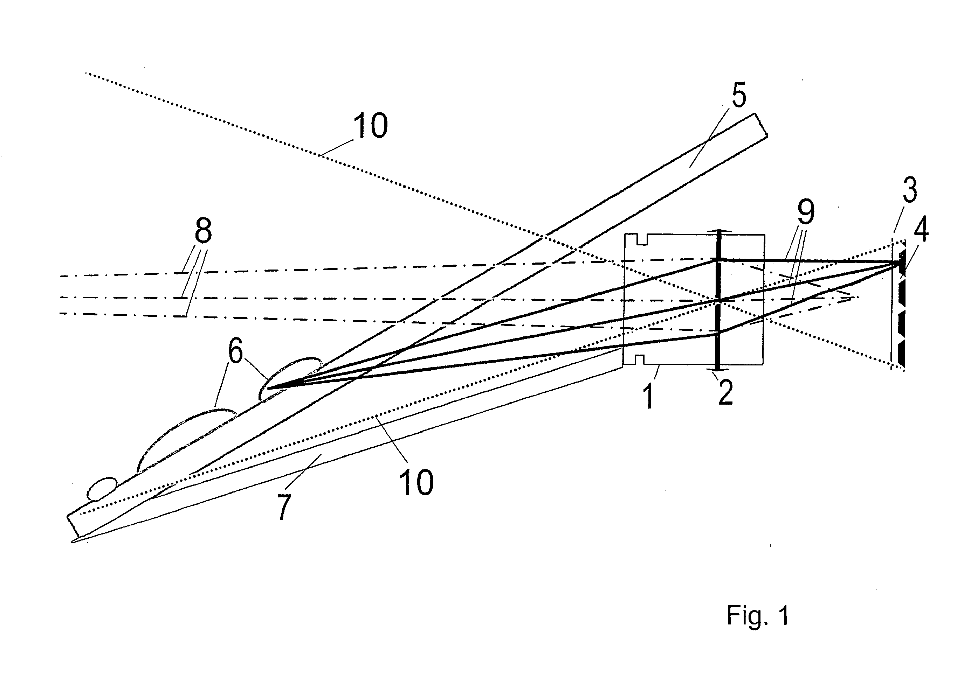

Fig. 1 zeigt eine schematische Darstellung der Strahlengänge (8,9) für einen ersten (8) und einen zweiten (9) Entfernungsbereich, die durch ein Objektiv (1) mit der Hauptebene (2) auf die sensitive Fläche eines Halbleiterelements (4) abgebildet werden. Das Sichtfeld (10) ist durch die gepunktet dargestellten Linien begrenzt. Das Objektiv (1) ist so zwischen Windschutzscheibe (5) und der sensitiven Fläche des Halbleiterelements (4) positioniert, dass zum einen das Sichtfeld (10) im unteren Bereich nicht durch die Streulichtblende (7) eingeschränkt wird, aber das verfügbare Volumen ausnutzt, und zum anderen ein Bereich der Windschutzscheibenaußenseite im Nahbereich (9) fokussiert auf die sensitive Fläche des Halbleiterelements (4) abgebildet wird. Sollte der Fernbereich (8) fokussiert auf der sensitiven Fläche des Halbleiterelements (4) abgebildet werden, müsste entweder das Objektiv (1) nach rechts verschoben werden oder das Halbleiterelement (4) müsste nach links verschoben werden. In beiden Fällen würde das Sichtfeld (10) durch die Streulichtblende (7) eingeschränkt und der Fernbereich würde nicht mehr scharf auf der sensitiven Fläche des Halbleiterelements (4) abgebildet. Ein derartiges optisches Modul entspricht dem Stand der Technik.

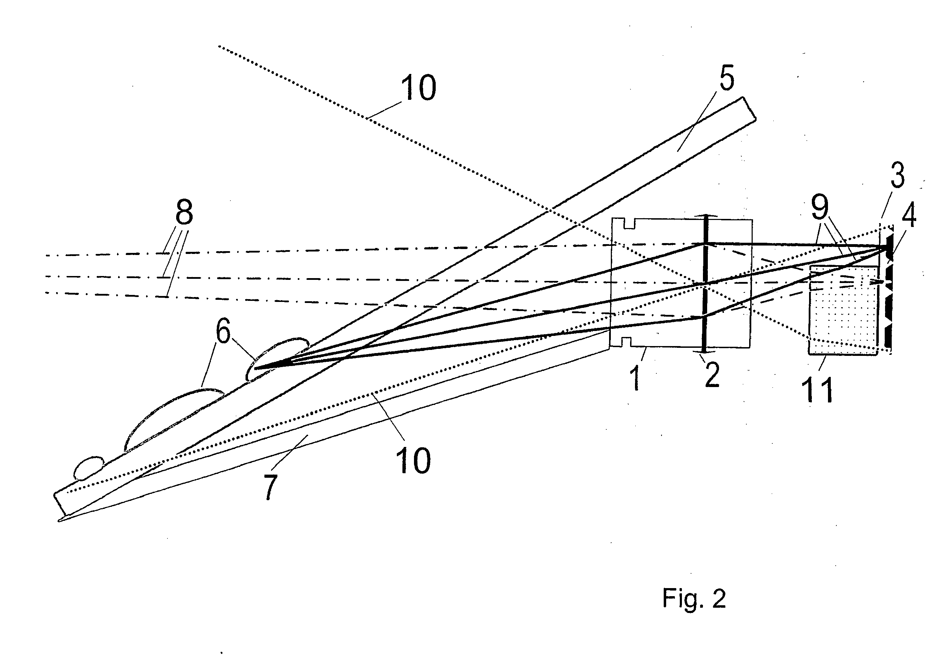

Der Parallelversatz beim Strahlengang durch die Windschutzscheibe (5) ist in den schematischen Darstellungen in Fig. 1 und 2 nicht berücksichtigt.

Fig. 2 zeigt ein optisches Modul mit einem zusätzlichen optischen Element (11), das in einem definierten Teilvolumen zwischen Objektiv (1) und der sensitiven Fläche des Halbleiterelements (4) angeordnet ist. Das Teilvolumen ist darauf bezogen, dass das zusätzliche optische Element den Sichtbereich (10) in zwei Teile unterteilt. Einen Teil, der aus dem zusätzlichen optischen Element (11) auf der Austrittsseite (rechts) auf die sensitive Fläche des Halbleiterelements (4) trifft und einen Teil, der auf die sensitive Fläche des Halbleiterelements (4) über das Medium trifft, das das zusätzliche optische Element (11) umgibt. Diese beiden Teile des Sichtfeldes (10) definieren auf der sensitiven Fläche des Halbleiterelements (4) zwei Bereiche. Der erste Bereich entspricht dem Bereich des Halbleiterelements (4), der durch das zusätzliche optische Element (11) abgedeckt ist und in dem nach dieser Darstellung der Fernbereich (8) fokussiert abgebildet wird. Der zweite Bereich entspricht dem über dem ersten Bereich liegenden, der nicht durch das zusätzliche optische Element (11) abgedeckt ist und in dem nach dieser Darstellung der Nahbereich (9) fokussiert abgebildet wird. Auf diese Weise enthält das Bild, das durch die sensitive Fläche des Halbleiterelements (4) aufgenommen wird gleichzeitig einen Bereich mit einer scharfen Nahbereichsabbildung und einen Bereich mit einer tiefenscharfen Fernbereichsabbildung. In der Nahbereichsabbildung können Wassertropfen (6), Schmutz, Schneeflocken oder dergleichen detektiert und klassifiziert werden. Gleichzeitig ist auf einem großen ersten Bereich des Kamerabildes das Verkehrsgeschehen in z. B. zwei bis 50 Meter Entfernung verfügbar und kann von verschiedenen Fahrerassistenzfunktionen verwendet und ausgewertet werden.

Einem videobasierten Regen- und Schmutzsensor mit einem erfindungsgemäßen optischen Modul steht eine Vielzahl von Bildpixeln zur Verfügung. Intelligente Algorithmen ermöglichen eine Unterscheidung zwischen Regen, Schmutz, Schnee, Scheibenvereisung oder Tau durch eine geometrische Objekterkennung.
Kantenerkennungsalgorithmen wie z.B. ein Sobel-Operator können in vertikaler und/oder horizontaler Richtung eingesetzt werden. Kanten, die ausschließlich in vertikaler Richtung erkannt werden, können auf Schlieren des Scheibenwischers hinweisen und eine Ausgabe eines Signals zum erneuten Wischen oder Einleiten einer Scheibenreinigung kann erfolgen. Bei persistierendem Auftreten von Schlieren kann ein Hinweis an den Fahrer zum Wechseln der Wischerblätter erfolgen.
Eine Fouriertransformation, insbesondere FFT kann zur Frequenzanalyse in der Nahbereichsabbildung, insbesondere zur Erkennung von hohen Frequenzen eingesetzt werden. Ein neuronales Netz kann zur Mustererkennung aus den Bilddaten durch Klassifikator mit typischen Objekten wie Regentropfen unterschiedlicher Größe, Schneeflocken, Schmutzpartikeln vortrainiert werden. Auch eine Histogrammauswertung kann zur Erkennung von Objekten durchgeführt werden.

Eine intelligente Beleuchtung kann die Bildanalyse unterstützen und sichern, z.B. durch eine definierte Beleuchtungsfunktion (z.B. sinusförmiger Lichtintensitätsverlauf oder mehrere Beleuchtungsquellen mit unterschiedlichen Einfallswinkeln).

Ein weiterer Vorteil dieser Erfindung ist ein positiver Einfluss auf das bisherige Problem der temperaturabhängigen Fokusverschiebung. Bei Temperaturerhöhung besteht typischerweise das Problem, dass sich das Objektiv (1) vom Bildsensor (4) wegbewegt. Damit erfolgt eine Fokusverschiebung vom Fernfeld (8) zum Nahfeld (9) hin. Der Einfluss des partiellen optischen Elements (11) in der Bildweite zeigt sich in einer Brechung des konvergenten Strahlengangs vom Lot weg (Übergang von Luft zum partiellen optischen Element (11) n_{Luft} < n_{POE}), wodurch die scharfe Abbildung eines Objektes weiter entfernt vom Objektiv (1) erfolgt als es beim gleichen Aufbau ohne partielles optisches Elements (11) der Fall wäre.
Unterliegt das System einer Erwärmung, vergrößert sich wie oben beschrieben der Abstand zwischen Bildsensor (4) und Objektiv (1). Gleichzeitig dehnt sich aber auch das partielle optische Element (11) aus und kompensiert die defokussierte Abbildung auf dem Bildsensor (4) in einem gewissen Maß. Diese Kombination verhält sich auch bei tiefen Temperaturen als positiver Kompensator für die Bildschärfe. Durch eine Materialoptimierung kann hier eine befriedigende Abbildungsqualität über den gesamten Temperaturbereich erzielt werden.

Eine Kamera ohne partielles optisches Element (11) ist auf den Nahbereich fokussiert. Das partielle optische Element (11) ermöglicht eine scharfe Abbildung des Fernbereichs (8). Eine Verschiebung des Objektivs (1) weg vom Bildsensor (4) aufgrund einer Temperaturerhöhung ist verantwortlich für eine unscharfe Abbildung von Nah- (9) und Fernbereich(8). Die Nahbereichsabbildung hat einen positiven Abbildungsverlauf über Temperatur, da sich mit dem wegbewegenden Objektiv (1) auch die Objektweite (Abstand von Objektivhauptebene (2) zur Windschutzscheibe (5)) verkleinert.
Ein weiterer positiver Ansatz zum temperaturabhängigen Fokusversatz durch die größer werdende Bildweite ist die damit entstehende Sichtfeldänderung welche das Sichtfeld (10) durch die Windschutzscheibe (5) verkleinert und damit eine Abbildung von höher liegenden Objektpunkten auf dem gleichen Bildpunkt zur Folge hat. Durch die geneigte Windschutzscheibe (5) wird nicht nur ein weiter oben liegender Objektpunkt erfasst, sondern eine scharfe Abbildung von Objekten mit einer kleineren Objektweite. Eine Verkleinerung der Objektweite bei gleichbleibender Brennweite bringt eine Verlängerung der Bildweite mit sich. Diese Verlängerung der Bildweite stellt bei der Nahabbildung eine selbstregulierende Temperaturkompensation dar. Es gilt: 1/f = 1/g + 1/b. Mit der Brennweite des Objektivs f, der Gegenstandsweite g (im Nahfeld z.B. 5,5cm) und der Bildweite der Nahfeldabbildung b.

Bei der Abbildung im Fernfeld (8) funktioniert dieser Korrekturmechanismus nicht. Zum einen, weil die Objektweite sehr viel größer ist und Änderungen nur eine sehr kleine Auswirkung auf die Bildweite haben, zum anderen betrachtet man in der Objektweite keine geneigte Ebene wie es bei der Windschutzscheibe (5) der Fall ist. Aus diesem Grund ist hier für das partielle optische Element (11) ein geeignetes Material auszuwählen, dessen thermische Ausdehnung einen positiven Einfluss auf die Fokussierung hat.

Ein optimaler Übergangsbereich der beiden Bildbereiche wird durch eine definierte Kante des partiellen optischen Elements (11) gewährleistet. Bei Elementen aus Glas entsteht ein "ausgefressener" Übergang zum Teilbild des Fernfeldes (8) durch Absplitterungen an der Glaskante. Beim Einsatz von Kunststoffelementen aus Polycarbonat oder PMMA können derartige Absplitterungen an der Kante vermieden werden. Der Übergang ist an den Strahlengang anzupassen und kann z.B. keilförmig oder abgestuft ausgeführt werden. Der Verwischungsbereich hängt zudem von der Dicke des partiellen optischen Elements (11) ab. Materialien mit hohem Brechungsindex bringen hier Vorteile.

Dadurch, dass ein erfindungsgemäßes optische Modul in der Lage ist, verschiedene Objekte sowohl auf der Windschutzscheibenaußenseite als auch auf der Windschutzscheibeninnenseite zu erkennen und zu unterscheiden, kann eine erweiterte automatische Scheibenwisch- und -wasch- und - belüftungsfunktionalität bereitgestellt werden. Regen, Schmutz, Schnee, Eis, Tau und Aerosolablagerungen könnten durch die große Anzahl an Bildpixeln durch bestimmte Erkennungsmerkmale unterschieden werden. Alle genannten Einflüsse beeinträchtigen die Sicht durch die Windschutzscheibe (5) und damit auch die anderen Fahrerassistenzfunktionen, die auf der Grundlage der Daten aus dem Teilbild des Fernfeldes (8) arbeiten.
Im Anschluss an eine Bildverarbeitung und Objekterkennung wird in Abhängigkeit der erkannten Sichtbehinderungen ein Steuersignal an die Scheibenwisch-, Scheibenwasch-, Klima-oder Lüftungsanlage gegeben und damit eine flexible, der Sichtbehinderung in Art und Ausmaß angepasste Reinigungs-oder Komfortfunktion automatisch eingeleitet.

Eine weitere Möglichkeit zur Nutzung der vorgestellten multifokalen Optik liegt neben der Regen- und Schmutzerkennung im Betrieb als "Scanner" bzw. Codelesegerät für ein Kraftfahrzeug. Eine Zielmarke auf der Windschutzscheibe (5), die beispielsweise einen aufgedruckten Code zur Windschutzscheibenidentifikation enthält, kann aufgenommen und verarbeitet werden. Identifizierte Codes können über eine Datenleitung insbesondere ein Bussystem an andere Steuergeräte gesendet werden.

Es wird die Nutzung der Abbildung des Nahbereichs (Windschutzscheibenaußenfläche) als zukünftige Kommunikationsschnittstelle zwischen Mensch und Fahrzeug vorgeschlagen, indem es einen Codeleser (vergleichbar einem Registrierscanner) darstellt, über den von außen Daten eingelesen werden können. So könnte z.B. die Kamera zum Öffnen des Fahrzeugs verwendet werden, indem z.B. der Fingerabdruck des Fahrers eingescannt wird, mit dem Finger ein eingespeicherter Weg abgefahren wird oder ein vorgehaltenes Codekärtchen gelesen wird.
Ein weiteres Beispiel ist das digitale Einlesen von wichtigen Informationen, die dem Fahrzeughalter eines geparkten Fahrzeugs mitgeteilt werden sollen. Diese könnte sich der Fahrzeughalter z.B. über einen Bordmonitor ansehen.

Gerade beim Einsatz von zukünftigen Stereokameras rückt die Einbauposition von der Mitte der Windschutzscheibe näher zum Rand und ist so einfacher für den Fahrzeugbesitzer zu erreichen. Die Kamera müsste sich dazu in einer Stand-by-Phase befinden und bei schneller Verdunkelung des Sichtfeldes aktiv werden mit der Bildverarbeitung und der Nahbereichsbeleuchtung.

Eine alternative Möglichkeit, eine multifokale Optik durch ein partielles optisches Element (11) zu gestalten, besteht darin, die Bildweite auf eine bestmögliche Fernbereichsabbildung einzustellen und als partielles optisches Element (11) einen Teil einer Sammellinse zu verwenden. In diesem Fall ist die Nahbereichsabbildung ohne partielles optisches Element (11) stark defokussiert. Allerdings kann eine Sammellinse (Teillinse) in der Bildweite den Abbildungsstrahlengang der Nahfeldabbildung kollimieren und damit eine ähnliche Abbildung ermöglichen wie bereits beschrieben.

### Bezugszeichen

- 1: Objektiv
- 2: Hauptebene des Objektivs
- 3: Abdeckglas des Halbleiterelements
- 4: Halbleiterelement mit sensitiver Fläche
- 5: Windschutzscheibe
- 6: Regentropfen
- 7: Streulichtblende
- 8: Fernbereich
- 9: Nahbereich
- 10': Sichtbereich
- 11: Zusätzliches, partielles optisches Element

## Patentansprüche

1. Optisches Modul umfassend
- ein Halbleiterelement (4) mit einer für elektromagnetische Strahlung sensitiven Fläche und
- ein Objektiv (1) zum Projizieren elektromagnetischer Strahlung auf die sensitive Fläche des Halbleiterelments (4),
- ein zusätzliches optisches Element,
**dadurch gekennzeichnet, dass** das zusätzliche optische Element (11) in einem definierten Teilvolumen im Raum zwischen dem Objektiv (1) und der sensitiven Fläche des Halbleiterelements (4) angeordnet ist und dass das Objektiv (1) derart positioniert ist und die Dicke des zusätzlichen optischen Elements (11) derart vorgegeben ist,
so dass durch das zusätzliche optische Element (11) in einem ersten Bereich der sensitiven Fläche des Halbleiterelements (4) ein optischer Fernbereich (8) abgebildet wird und in einem zweiten Bereich des Sichtbereichs, in dem sich das zusätzliche optische Element (11) nicht befindet, ein optischer Nahbereich (9) abgebildet wird.

2. Optisches Modul nach Anspruch 1, **dadurch gekennzeichnet, dass** der Brechungsindex des zusätzlichen optischen Elements (11) größer ist als der Brechungsindex des Mediums, das das zusätzliche optische Element (11) umgibt.

3. Optisches Modul nach Anspruch 1 oder 2, **dadurch gekennzeichnet, dass** das zusätzliche optische Element (11) eine planparallele transparente Platte ist.

4. Optisches Modul nach Anspruch 3, **dadurch gekennzeichnet, dass** die planparallele transparente Platte (11) aus Kunststoff ist.

5. Optisches Modul nach einem der Ansprüche 1 oder 2, **dadurch gekennzeichnet, dass** das zusätzliche optische Element (11) ein Teil einer Zerstreuungslinse, ein Mikrolinsenarray mit Zerstreuungslinsen oder ein diffraktives Mikrolinsenarray ist.

6. Optisches Modul nach einem der Ansprüche 1 oder 2, **dadurch gekennzeichnet, dass** das zusätzliche optische Element (11) mindestens zwei planparallele Bereiche unterschiedlicher Dicke umfasst.

7. Optisches Modul nach einem der Ansprüche 1 oder 2, **dadurch gekennzeichnet, dass** das zusätzliche optische Element (11) mindestens zwei Bereiche mit Materialien unterschiedlicher Brechungsindizes umfasst.

8. Optisches Modul nach einem der Ansprüche 1 oder 2, **dadurch gekennzeichnet, dass** das zusätzliche optische Element (11) keilförmig ist.

9. Optisches Modul nach einem der Ansprüche 1 bis 8, **dadurch gekennzeichnet, dass** das zusätzliche optische Element (11) zyklisch in den Raum zwischen Objektiv (1) und der sensitiven Fläche des Halbleiterelements (4) eingebracht werden kann.

10. Optisches Modul nach einem der Ansprüche 1 bis 8, **dadurch gekennzeichnet, dass** zusätzliche optische Elemente (11) unterschiedlicher Dicke und/oder unterschiedlicher Brechungsindizes zyklisch in den Raum zwischen Objektiv (1) und der sensitiven Fläche des Halbleiterelements (4) eingebracht werden können.

11. Optisches Modul nach einem der Ansprüche 1 oder 2, **dadurch gekennzeichnet, dass** das zusätzliche optische Element (11) durch Füllung eines Teilvolumens mit einem flüssigen Medium mit einem größeren Brechungsindex als das umgebende Medium realisiert ist.

12. Optisches Modul nach einem der Ansprüche 1 bis 11, **dadurch gekennzeichnet, dass** das zusätzliche optische Element (11) so dimensioniert ist, dass der erste Bereich der sensitiven Fläche des Halbleiterelements größer ist als der zweite Bereich.

13. Optisches Modul nach einem der Ansprüche 1 bis 12, **dadurch gekennzeichnet, dass** auf mindestens einer Seite des zusätzlichen optischen Elements (11) eine Beschichtung angebracht ist, durch die Reflexionen vermieden werden können.

14. Optisches Modul nach einem der Ansprüche 1 bis 13, **dadurch gekennzeichnet, dass** eine Beschichtung auf mindestens einer Seite des zusätzlichen optischen Elements (11) angebracht ist, die elektromagnetische Strahlung in einem definierten Wellenlängenbereich filtert.

15. Fahrzeug mit einem optischen Modul nach einem der Ansprüche 1 bis 14, **dadurch gekennzeichnet, dass** das optische Modul im Innenraum des Fahrzeugs hinter der Windschutzscheibe (5) in Fahrtrichtung den Außenraum erfassend angeordnet ist.

16. Fahrzeug nach Anspruch 15, **dadurch gekennzeichnet, dass** das Objektiv (1) des optischen Moduls derart positioniert ist, dass die Außenseite der Windschutzscheibe (5) scharf auf dem zweiten Bereich der sensitiven Fläche des Halbleiterelements (4) abgebildet wird.

17. Fahrzeug nach Anspruch 16, **dadurch gekennzeichnet, dass** die Bilder vom zweiten Bereich der sensitiven Fläche des Halbleiterelements (4) ausgewertet werden, wobei Regen und/oder Schmutzpartikel auf der Windschutzscheibe (5) erkannt werden und ein Ausgabesignal an eine Scheibenwischersteuerung und/oder Scheibenreinigungssteuerung ausgegeben werden kann.

18. Fahrzeug nach Anspruch 16 oder 17, **dadurch gekennzeichnet, dass** eine Beleuchtungsquelle vorgesehen ist, die den Bereich (9) des Sichtfeldes (10) durch die Windschutzscheibe (5) beleuchtet, der im zweiten Bereich der sensitiven Fläche des Halbleiterelements (4) abgebildet wird.

19. Fahrzeug nach Anspruch 18, **dadurch gekennzeichnet, dass** die Strahlung der Beleuchtungsquelle über einen flexiblen Lichtleitkörper in die Windschutzscheibe (5) eingekoppelt wird.

20. Fahrzeug nach einem der Ansprüche 15 bis 19, **dadurch gekennzeichnet, dass** der Bereich (9) des Sichtfeldes (10) durch die Windschutzscheibe (5) mit Licht im infraroten Wellenlängenbereich ausgeleuchtet wird und das zusätzliche optische Element (11) mit einem Filter beschichtet ist, der die Transmission im infraroten Wellenlängenbereich unterdrückt.

21. Fahrzeug nach einem der Ansprüche 17 bis 20, **dadurch gekennzeichnet, dass** zusätzlich ein kapazitiver Regensensor im Fahrzeug vorgesehen ist und eine gemeinsame Auswerteeinheit die Signale von kapazitivem und kamerabasiertem Regensensor auswertet.

22. Fahrzeug nach einem der Ansprüche 15 bis 21, **dadurch gekennzeichnet, dass** eine Keilplatte zwischen Windschutzscheibe (5) und Objektiv (1) im objektseitigen Strahlengang der Nahbereichsabbildung (9) angeordnet ist.

23. Fahrzeug nach Anspruch 22, **dadurch gekennzeichnet, dass** die Keilplatte mit einer Filterbeschichtung beschichtet ist, die bestimmte Wellenlängenbereiche unterdrückt.

24. Fahrzeug nach Anspruch 22 oder 23, **dadurch gekennzeichnet, dass** die Oberseite der Keilplatte zur Streulichtunterdrückung geschwärzt ist.

25. Fahrzeug nach Anspruch 19, **dadurch gekennzeichnet, dass** ein Auskoppelelement in festem Kontakt mit der Windschutzscheibe (5) angeordnet ist, welches die eingekoppelte Strahlung auskoppelt, so dass diese im zweiten Bereich der sensitiven Fläche des Halbleiterelements (4) abgebildet wird.

26. Fahrzeug nach Anspruch 25, **dadurch gekennzeichnet, dass** das Auskoppelelement mit einer Filterbeschichtung beschichtet ist, die bestimmte Wellenlängenbereiche unterdrückt.

27. Fahrzeug nach Anspruch 25 oder 26, **dadurch gekennzeichnet, dass** das Auskoppelelement auf der dem Objektiv (1) zugewandten Seite eine matte Oberfläche aufweist.

28. Fahrzeug nach einem der Ansprüche 25 bis 27, **dadurch gekennzeichnet, dass** das Auskoppelelement den Teilbereich des Sichtfeldes der Windschutzscheibe (5) bedeckt, der von der Nahbereichsabbildung erfasst wird.

29. Verfahren zur Kalibrierung des Abstands und der Position zwischen einer Windschutzscheibe (5) und einem optischen Modul bei einem Fahrzeug nach einem der Ansprüche 15 bis 28, **dadurch gekennzeichnet, dass** das optische Modul eine auf der Windschutzscheibe (5) angeordnete Zielmarkierung auf der sensitiven Fläche des Halbleiterelements (4) fokussiert abbildet, so dass von einer Auswerteeinheit eine Veränderung der Position der Windschutzscheibe (5) relativ zur optischen Achse des optischen Moduls im Vergleich zu einer gespeicherten Ausgangsposition gemessen wird.

## Claims

1. An optical module comprising
- a semiconductor element (4) with a surface that is sensitive to electromagnetic radiation, and
- an objective lens (1) for the projection of electromagnetic radiation onto the sensitive surface of the semiconductor element (4),
- an additional optical element,
**characterized in that** the additional optical element (11) is arranged in a defined partial volume in the space between the objective lens (1) and the sensitive surface of the semiconductor element (4) and that the objective lens (1) is positioned in such a manner and the thickness of the additional optical element (11) is predetermined in such a manner
that, by the additional optical element (11), an optical far range (8) is imaged in a first region of the sensitive surface of the semiconductor element (4) and an optical near range (9) is imaged in a second region of the visual range where the additional optical element (11) is not located.

2. The optical module according to claim 1, **characterized in that** the index of refraction of the additional optical element (11) is higher than the index of refraction of the medium surrounding the additional optical element (11).

3. The optical module according to claim 1 or 2, **characterized in that** the additional optical element (11) is a plane-parallel transparent plate.

4. The optical module according to claim 3, **characterized in that** the plane-parallel transparent plate (11) is made of a synthetic material.

5. The optical module according to any one of claims 1 or 2, **characterized in that** the additional optical element (11) is a part of a diverging lens, is a microlens array with diverging lenses or is a diffractive microlens array.

6. The optical module according to any one of claims 1 or 2, **characterized in that** the additional optical element (11) comprises at least two plane-parallel regions of different thicknesses.

7. The optical module according to any one of claims 1 or 2, **characterized in that** the additional optical element (11) comprises at least two regions with materials having different indices of refraction.

8. The optical module according to any one of claims 1 or 2, **characterized in that** the additional optical element (11) is wedge-shaped.

9. The optical module according to any one of claims 1 to 8, **characterized in that** the additional optical element (11) can be cyclically introduced into the space between the objective lens (1) and the sensitive surface of the semiconductor element (4).

10. The optical module according to any one of claims 1 to 8, **characterized in that** additional optical elements (11) having different thicknesses and/or different indices of refraction can be cyclically introduced into the space between the objective lens (1) and the sensitive surface of the semiconductor element (4).

11. The optical module according to any one of claims 1 or 2, **characterized in that** the additional optical element (11) is realized by filling a partial volume with a liquid medium having an index of refraction higher than that of the surrounding medium.

12. The optical module according to any one of claims 1 to 11, **characterized in that** the additional optical element (11) is dimensioned in such a manner that the first region of the sensitive surface of the semiconductor element is larger than the second region.

13. The optical module according to any one of claims 1 to 12, **characterized in that** a coating by means of which reflections can be avoided is provided on at least one side of the additional optical element (11).

14. The optical module according to any one of claims 1 to 13, **characterized in that** a coating for filtering electromagnetic radiation in a defined wavelength range is provided on at least one side of the additional optical element (11).

15. A vehicle with an optical module according to any one of claims 1 to 14, **characterized in that** the optical module is arranged in the passenger compartment of the vehicle behind the windshield (5) and covers the region outside the vehicle in the direction of motion of the vehicle.

16. The vehicle according to claim 15, **characterized in that** the objective lens (1) of the optical module is positioned in such a manner that the outer surface of the windshield (5) is sharply imaged on the second region of the sensitive surface of the semiconductor element (4).

17. The vehicle according to claim 16, **characterized in that** the images from the second region of the sensitive surface of the semiconductor element (4) are evaluated, wherein rain and/or dirt particles on the windshield (5) are detected and an output signal can be outputted to a windshield wiper control system and/or a windshield washer control system.

18. The vehicle according to claim 16 or 17, **characterized in that** an illumination source is provided that illuminates the region (9) of the lens coverage (10) through the windshield (5) which is imaged in the second region of the sensitive surface of the semiconductor element (4).

19. The vehicle according to claim 18, **characterized in that** the radiation of the illumination source is coupled into the windshield (5) via a flexible light guide body.

20. The vehicle according to any one of claims 15 to 19, **characterized in that** the region (9) of the lens coverage (10) through the windshield (5) is illuminated with light in the infrared wavelength range and the additional optical element (11) is coated with a filter that suppresses transmission in the infrared wavelength range.

21. The vehicle according to any one of claims 17 to 20, **characterized in that**, in addition, a capacitive rain sensor is provided in the vehicle and a shared evaluation unit evaluates the signals from the capacitive rain sensor and from the camera-based rain sensor.

22. The vehicle according to any one of claims 15 to 21, **characterized in that** a camera wedge is arranged between the windshield (5) and the objective lens (1) in the object-side beam path of near-range imaging (9).

23. The vehicle according to claim 22, **characterized in that** the camera wedge is coated with a filter coating that suppresses particular wavelength ranges.

24. The vehicle according to claim 22 or 23, **characterized in that** the upper face of the camera wedge is blackened for the suppression of stray light.

25. The vehicle according to claim 19, **characterized in that** a decoupling element firmly contacts the windshield (5) and decouples the coupled-in radiation so that said radiation is imaged in the second region of the sensitive surface of the semiconductor element (4).

26. The vehicle according to claim 25, **characterized in that** the decoupling element is coated with a filter coating that suppresses particular wavelength ranges.

27. The vehicle according to claim 25 or 26, **characterized in that** that side of the decoupling element which faces the objective lens (1) has a mat surface.

28. The vehicle according to any one of claims 25 to 27, **characterized in that** the decoupling element covers that partial region of the lens coverage of the windshield (5) which is covered by near-range imaging.

29. A method for calibrating the distance and the position between a windshield (5) and an optical module in a vehicle according to any one of claims 15 to 28, **characterized in that** the optical module forms a focused image of a target mark arranged on the windshield (5) on the sensitive surface of the semiconductor element (4) so that an evaluation unit measures a change of the position of the windshield (5) relative to the optical axis of the optical module compared to a stored starting position.

## Revendications

1. Module optique, comprenant
- un élément semi-conducteur (4) avec une surface sensible au rayonnement électromagnétique et
- un objectif (1) pour la projection du rayonnement électromagnétique sur la surface sensible de l'élément semi-conducteur (4),
- un élément optique supplémentaire,
**caractérisé en ce que** l'élément optique supplémentaire (11) est disposé dans un volume partiel défini dans l'espace entre l'objectif (1) et la surface sensible de l'élément semi-conducteur (4), et **en ce que** l'objectif (1) est positionné de telle sorte et l'épaisseur de l'élément optique supplémentaire (11) est prescrite de telle sorte que,
sous l'action de l'élément optique supplémentaire (11), une zone lointaine optique (8) est reproduite dans une première zone de la surface sensible de l'élément semi-conducteur (4), et une zone proche optique (9) est reproduite dans une deuxième zone du champ de vision dans lequel l'élément optique supplémentaire (11) ne se trouve pas.

2. Module optique selon la revendication 1, **caractérisé en ce que** l'indice de réfraction de l'élément optique supplémentaire (11) est plus grand que l'indice de réfraction du milieu qui entoure l'élément optique supplémentaire (11).

3. Module optique selon la revendication 1 ou 2, **caractérisé en ce que** l'élément optique supplémentaire (11) est une plaque transparente à faces planes et parallèles.

4. Module optique selon la revendication 3, **caractérisé en ce que** le plaque transparente à faces planes et parallèles (11) est en matière plastique.

5. Module optique selon une des revendications 1 ou 2, **caractérisé en ce que** l'élément optique supplémentaire (11) est une partie d'une lentille divergente, un groupe de microlentilles avec des lentilles divergentes ou un groupe diffractif de microlentilles.

6. Module optique selon une des revendications 1 ou 2, **caractérisé en ce que** l'élément optique supplémentaire (11) comprend au moins deux zones à faces planes et parallèles d'épaisseur différente.

7. Module optique selon une des revendications 1 ou 2, **caractérisé en ce que** l'élément optique supplémentaire (11) comprend au moins deux zones avec des matériaux d'indice de réfraction différent.

8. Module optique selon une des revendications 1 ou 2, **caractérisé en ce que** l'élément optique supplémentaire (11) est en forme de coin.

9. Module optique selon une des revendications 1 à 8, **caractérisé en ce que** l'élément optique supplémentaire (11) peut être mis en place cycliquement dans l'espace entre l'objectif (1) et la surface sensible de l'élément semi-conducteur (4).

10. Module optique selon une des revendications 1 à 8, **caractérisé en ce que** des éléments optiques supplémentaires (11) d'épaisseur différente et/ou d'indice de réfraction différent peuvent être mis en place cycliquement dans l'espace entre l'objectif (1) et la surface sensible de l'élément semi-conducteur (4).

11. Module optique selon une des revendications 1 ou 2, **caractérisé en ce que** l'élément optique supplémentaire (11) peut être réalisé par le remplissage d'un volume partiel avec un milieu liquide ayant un indice de réfraction plus grand que le milieu ambiant.

12. Module optique selon une des revendications 1 à 11, **caractérisé en ce que** l'élément optique supplémentaire (11) est dimensionné de telle sorte que la première zone de la surface sensible de l'élément semi-conducteur est plus grande que la deuxième zone.

13. Module optique selon une des revendications 1 à12, **caractérisé en ce que**, sur au moins un côté de l'élément optique supplémentaire (11), il est appliqué un revêtement qui permet d'éviter les réflexions.

14. Module optique selon une des revendications 1 à 13, **caractérisé en ce qu'**un revêtement est appliqué sur au moins un côté de l'élément optique supplémentaire (11) et filtre le rayonnement électromagnétique dans une plage définie de longueurs d'onde.

15. Véhicule avec un module optique selon une des revendications 1 à 14, **caractérisé en ce que** le module optique est disposé dans l'habitacle du véhicule derrière le parebrise (5) dans le sens de la marche de façon à détecter l'espace extérieur.

16. Véhicule selon la revendication 15, **caractérisé en ce que** l'objectif (1) du module optique est positionné de telle sorte que le côté extérieur du parebrise (5) est reproduit avec netteté sur la deuxième zone de la surface sensible de l'élément semi-conducteur (4).

17. Véhicule selon la revendication 16, **caractérisé en ce que** les images de la deuxième zone de la surface sensible de l'élément semi-conducteur (4) sont analysées, la pluie et/ou des particules d'impuretés sur le parebrise (5) étant détectées et un signal de sortie pouvant être délivré à une commande d'essuie-glaces et/ou à une commande de lave-glace.

18. Véhicule selon la revendication 16 ou 17, **caractérisé en ce qu'**il est prévu une source d'éclairage qui éclaire la zone (9) du champ de vision (10) à travers le parebrise (5) qui est représentée dans la deuxième zone de la surface sensible de l'élément semi-conducteur (4).

19. Véhicule selon la revendication 18, **caractérisé en ce que** le rayonnement de la source d'éclairage est injecté dans le parebrise (5) par le biais d'un guide de lumière flexible.

20. Véhicule selon une des revendications 15 à 19, **caractérisé en ce que** la zone (9) du champ de vision (10) à travers le parebrise (5) est éclairée par de la lumière dans la plage infrarouge de longueurs d'onde et **en ce que** l'élément optique supplémentaire (11) est revêtu d'un filtre qui supprime la transmission dans la plage infrarouge de longueurs d'onde.

21. Module optique selon une des revendications 17 à 20, **caractérisé en ce que**, en plus, un capteur de pluie capacitif est prévu dans le véhicule, et **en ce qu'**une unité d'analyse commune analyse les signaux du capteur de pluie capacitif et faisant appel à une caméra.

22. Module optique selon une des revendications 15 à 21, **caractérisé en ce que** la plaque cunéiforme est disposée entre le parebrise (5) et l'objectif (1) sur le trajet des rayons côté objet de la reproduction de zone proche (9).

23. Véhicule selon la revendication 22, **caractérisé en ce que** la plaque cunéiforme est revêtue d'un revêtement filtrant qui supprime certaines plages de longueurs d'onde.

24. Véhicule selon la revendication 22 ou 23, **caractérisé en ce que** le côté supérieur de la plaque cunéiforme est noirci pour supprimer la lumière parasite.

25. Véhicule selon la revendication 19, **caractérisé en ce qu'**un élément de découplage est disposé en contact fixe avec le parebrise (5) et découple le rayonnement injecté de telle sorte que ce dernier est reproduit dans la deuxième zone de la surface sensible de l'élément semi-conducteur (4).

26. Véhicule selon la revendication 25, **caractérisé en ce que** l'élément de découplage est revêtu d'un revêtement filtrant qui supprime certaines plages de longueurs d'onde.

27. Véhicule selon la revendication 25 ou 26, **caractérisé en ce que** l'élément de découplage présente une surface mate sur le côté tourné vers l'objectif (1).

28. Véhicule selon la revendication 25 à 27, **caractérisé en ce que** l'élément de découplage couvre la zone partielle du champ de vision du parebrise (5) qui est détectée par la reproduction de la zone proche.

29. Procédé d'étalonnage de la distance et de la position entre un parebrise (5) et un module optique dans le cas d'un véhicule selon une des revendications 15 à 28, **caractérisé en ce que** le module optique reproduit, de façon focalisée sur la surface sensible de l'élément semi-conducteur (4), un repère de visée disposé sur le parebrise (5) de telle sorte qu'une unité d'analyse mesure une variation de la position du parebrise (5) par rapport à l'axe optique du module optique par comparaison avec une position initiale enregistrée.
